# EUROPEAN PATENT SPECIFICATION

(11) **EP 3 514 019 B1**
(45) Date of publication and mention of the grant of the patent: **10.03.2021**
(21) Application number: 17850612.7
(22) Date of filing: 15.08.2017
(51) Int. Cl.: B60R 21/207, B60R 21/231

(54) **SIDE AIRBAG DEVICE**
SEITENAIRBAGVORRICHTUNG
DISPOSITIF DE COUSSIN DE SÉCURITÉ GONFLABLE LATÉRAL

(30) Priority: 14.09.2016 JP 2016179139
(43) Date of publication of application: 24.07.2019
(73) Proprietor: Autoliv Development AB, 447 83 Vårgårda (SE)
(72) Inventor: FUMA, Makoto, Yokohama-shi Kanagawa 222-8580 (JP); KOBAYASHI, Yuto, Yokohama-shi Kanagawa 222-8580 (JP)
(74) Representative: Müller Verweyen
(86) International application number: PCT/JP2017/029348
(87) International publication number: WO 2018/051706

(56) References cited:
- JP-A- 2007 083 835
- JP-A- 2016 088 349

## Description

### [Technical Field]

The present invention relates to a side airbag device for restraining an occupant at a vehicle seat from the side when an impact has occurred in a vehicle, for example.

### [Background Art]

Most of recent vehicles are equipped with airbags as standard. An airbag is a safety device that operates in an emergency, such as collision of vehicles, and is expanded and deployed by gas pressure to receive and protect an occupant. There are various kinds of airbags depending on installation positions and purposes. For example, a front airbag device is provided at the center of a steering wheel in order to protect a driver from collision in the longitudinal direction. Further, to protect occupants from side collision and subsequent rollover, a curtain airbag device to be expanded and deployed along a side window from the vicinity of a ceiling of a wall portion, and a side airbag device to be expanded and deployed toward the side of an occupant from a side portion of a seat, are provided.

The physical sizes of occupants who ride on vehicles vary from large occupants to small occupants. For example, in a side airbag device in Patent Literature 1, side walls on both sides of an air bag in the vehicle width direction are sewn to form a pair of front and rear V seams. At lower ends of the pair of front and rear V seams, a pair of circular seams continuous thereto are formed. According to Patent Literature 1, these seams are functioned as an expansion limiting structure such that the head of a large occupant is protected by a region between the V seams and the head of a small occupant is protected by a region between the circular seams.

### [Citation List]

### [Patent Literature]

[PTL 1] Japanese Patent Application Publication No. 2016-252773 In a further known patent literature document JP 2016-88349 A a side airbag device according to the preamble of claim 1 is disclosed.

### [Summary of Invention]

### [Technical Problem]

However, in a configuration in which the inside of a cushion is partitioned by seams as disclosed in Patent Literature 1, an unsewn portion (portion not unsewn) is provided between the seams such that gas circulates. In this case, depending on how the force is applied upon expansion and deployment, it may be difficult to apply the force in a direction to open an unsewn portion between seams, and the gas cannot smoothly circulate. In particular, in Patent Literature 1, the gas can flow into an unsewn portion between two seams only from the bottom. Thus, there is a feat in that it may be more difficult to cause the gas to flow into the unsewn portion.

It is conceivable to partition the inside of the cushion by tether (also called "baffle") rather than seams. Patent Literature 1 has made a study of partitioning of the inside of the cushion by tether. However, if tether extending in the vehicle longitudinal direction is used as in Patent Literature 1, the positions of a region for protecting the head of a small occupant in the vehicle longitudinal direction and the height direction are extremely limited.

Patent Literature 1 also discloses a configuration in which the inside of a cushion is partitioned by vertical tether extending in the vehicle vertical direction. Although Patent Literature 1 mentions the arrangement of the vertical tether in side view, Patent Literature 1 does not disclose the shape of the vertical tether at all. Thus, there is room for further improvement in order to support various positions of the head that changes depending on the difference in physical size of occupants.

The present invention has been made in view of the above, and it is an object thereof to provide a side airbag device capable of appropriately restraining, for each occupant, the head of the occupant that variously changes in position depending on the physical size of the occupant.

### [Solution to Problem]

In order to solve the above-mentioned problem, a representative configuration of a side airbag device according to the present invention : is defined by claim 1.

A chamber of the intermediate region surrounded by the front baffle, the rear baffle, and the base cloth of the cushion between the baffles may have an inverted frustum shape when the cushion is expanded and deployed.

In the above-mentioned configuration, the front baffle and the rear baffle are inverted trapezoids. In this manner, the thickness of the intermediate region in the vehicle width direction between the front baffle and the rear baffle can be changed continuously from the top to the bottom. An upper part of the intermediate region has the largest thickness in the vehicle width direction in the intermediate region. Consequently, the heavy head of a large occupant can be reliably restrained with a sufficient thickness.

The weight of the head of a small occupant is small, and hence the thickness of the cushion for restraining the head may be smaller than that for a large occupant. When restraining the head of a small occupant, if the thickness of the cushion is too large, impact on the head upon contact with the cushion may increase. Thus, according to the present invention, the thickness of the intermediate region becomes smaller toward the bottom. Consequently, the head of a small occupant is restrained at a lower part of the intermediate region, that is, a thin portion, thereby alleviating the impact on the head.

As described above, the thickness of the intermediate region in the vehicle width direction becomes continuously smaller toward the bottom. Consequently, the head of an occupant that variously changes in position depending on the physical size of the occupant can be appropriately restrained for each occupant.

Further, with the above-mentioned configuration, both lateral sides of the front baffle and the rear baffle are bonded to inner surfaces of the base cloth such that the distance between upper sides is larger than the distance between lower sides. Specifically, the front baffle and the rear baffle are bonded to the base cloth so as to have a V shape in side view. In this manner, when the cushion is expanded and developed, in the intermediate region, the curvature of the side surface of the cushion becomes larger from the top to the bottom.

The curvature of the cushion at the upper part of the intermediate region is small. Thus, the contact area of the cushion with the head of a large occupant increases. Thus, the heavy head can be restrained with a wide area. The curvature of the cushion at the lower part of the intermediate region is large. The lower part of the intermediate region corresponds to the vicinity of the shoulders of a large occupant. The shoulder part protrudes in the vehicle width direction as compared with the head, and by restraining the shoulder by this part thinner than the upper part (protection region of head), the entire occupant can be received by the airbag without excessively protecting only the head or shoulder, which is preferred in view of balance of restraint. At the lower part of the intermediate region, the contact area of the cushion with the head of a small occupant decreases. Thus, impact on the head of a small occupant from the cushion upon restraint can be alleviated as compared with a part on a large occupant, and hence even a small occupant can be appropriately protected and restrained.

The inflator may be disposed inside a seat back at a position lower than the intermediate region. In side view with the cushion expanded, a distance from the upper side of the front baffle to a front edge of the cushion may be smaller than a distance from the lower side of the front baffle to the front edge of the cushion, and a distance from the upper side of the rear baffle to a rear edge of the cushion may be smaller than a distance from the lower side of the rear baffle to the rear edge of the cushion.

In this manner, gas channels that become narrower toward the top are formed between the two baffles and the front edge and the rear edge of the cushion, that is, on the outer side of the intermediate region. A wide opening of the intermediate region formed between the upper sides of the two baffles is disposed ahead of the tapered gas channels. Thus, the gas flows into the intermediate region from the upper wide opening more preferentially than the lower narrow opening. The upper part of the intermediate region is thicker than the lower part thereof and requires a larger amount of gas. The gas flows into the upper part preferentially, and hence the head of a large occupant can be more reliably restrained.

A distance between an upper edge of the cushion and the upper side of the front baffle and a distance between the upper edge of the cushion and the upper side of the rear baffle may be smaller than the distance between the upper sides of the front baffle and the rear baffle. In this manner, expanding and deploying gas that has passed through the channel above the baffle can be more efficiently guided into a space partitioned by the two baffles.

### [Advantageous Effects of Invention]

The present invention can provide a side airbag device capable of appropriately restraining, for each occupant, the head of the occupant that variously changes in position depending on the physical size of the occupant.

### [Brief Description of Drawings]

Fig. 1 is a diagram exemplifying a side airbag device according to an embodiment of the present invention.
Fig. 2 is a front view of a front baffle in Fig. 1 as seen from the front.
Fig. 3 is a cross-sectional view of the side airbag device in

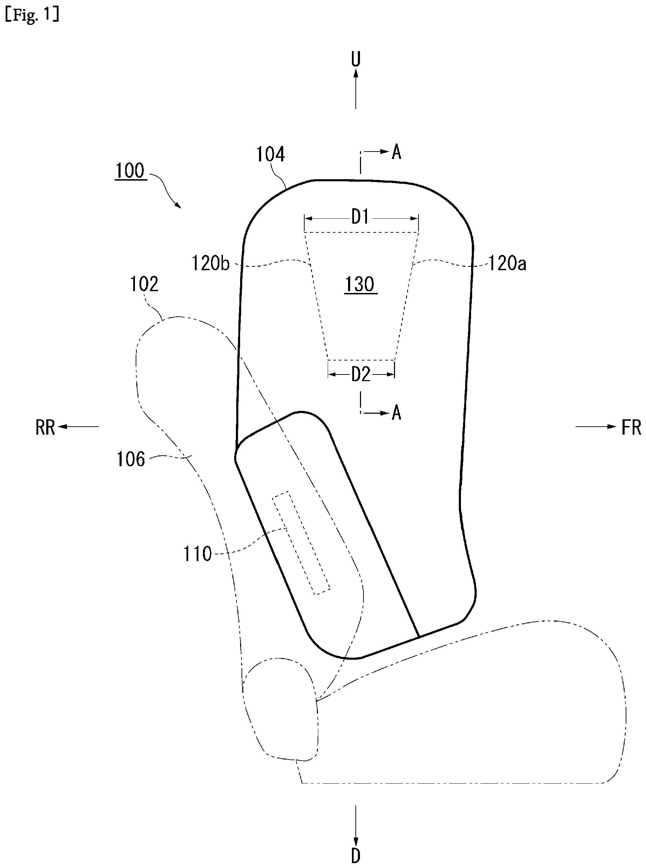

Fig. 1 taken along the line A-A.

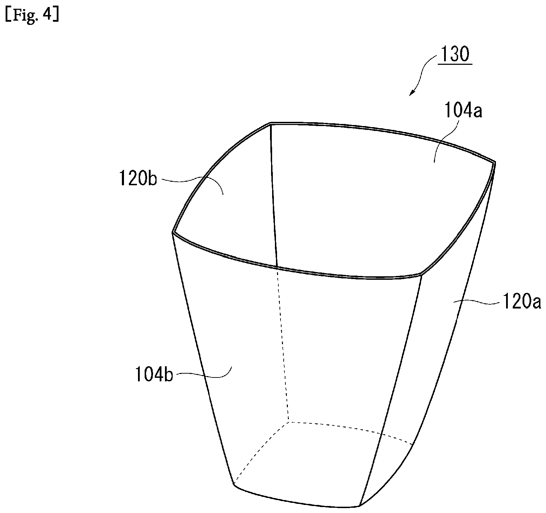

Fig. 4 is a perspective view of an intermediate region observed from the above when a cushion in Fig. 1 is expanded and deployed.

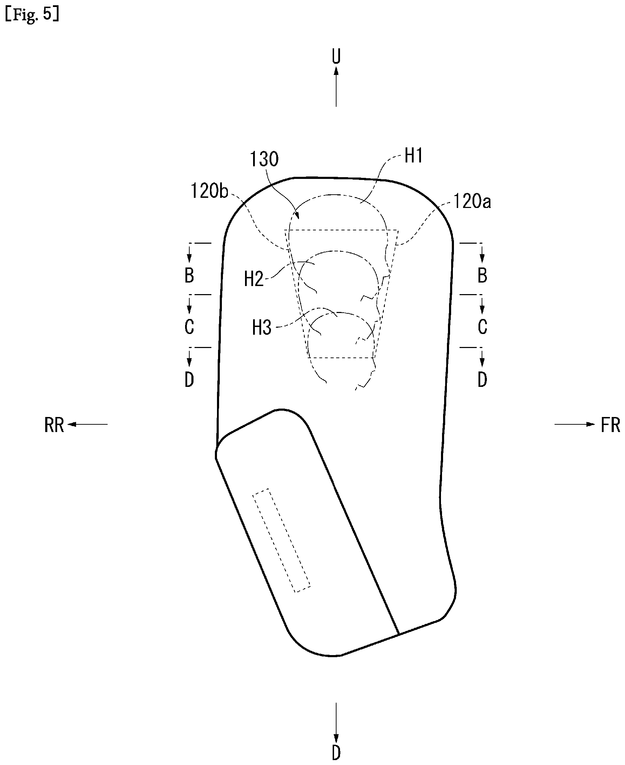

Fig. 5 is a diagram exemplifying a restraint position of the head of an occupant in the intermediate region in Fig. 4.

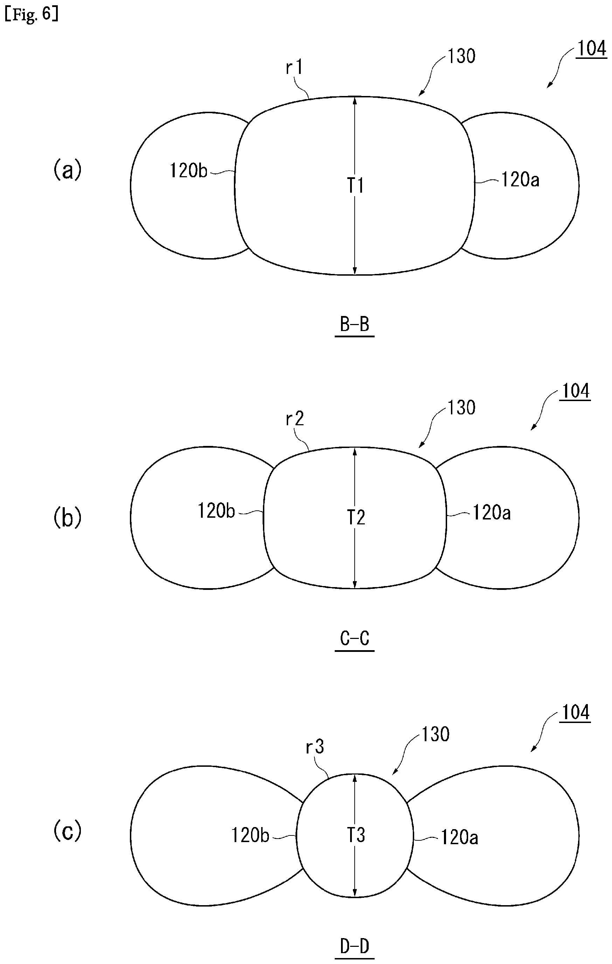

Fig. 6 shows cross-sectional views of the cushion in Fig. 5.

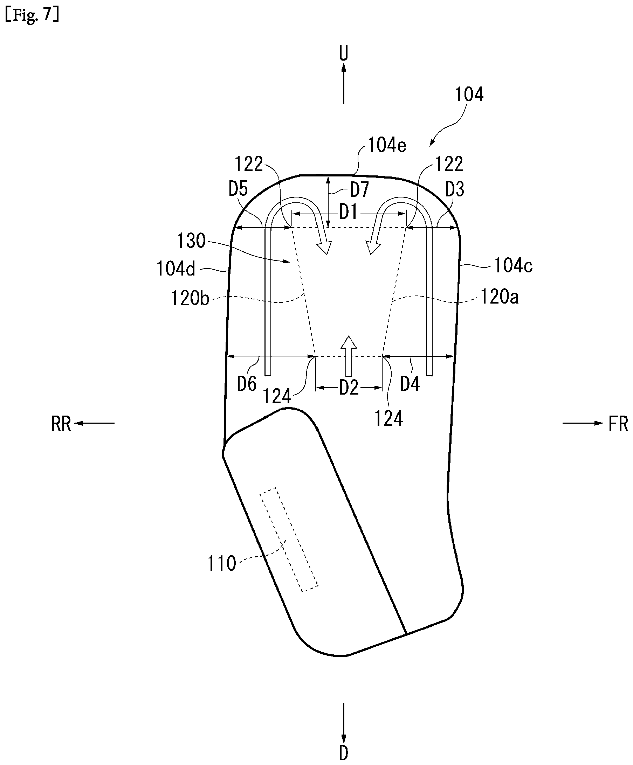

Fig. 7 is a diagram for describing the flow of gas in the cushion in Fig. 1.

### [Reference Signs List]

- H1 to H3: Head
- D1 to D7: Distance
- 100: Side airbag device
- 102: Seat
- 104: Cushion
- 104a: Inner surface
- 104b: Inner surface
- 104c: Front edge
- 104d: Rear edge
- 106: Seat back
- 110: Inflator
- 120a: Front baffle
- 120b: Rear baffle
- 122: Upper side
- 124: Lower side
- 126a: Lateral side
- 126b: Lateral side
- 130: Intermediate region

### [Description of Embodiments]

Referring to the accompanying drawings, exemplary embodiments of the present invention are described in detail below. Dimensions, materials, and other specific numerical values indicated in the embodiments are merely illustrative for facilitating the understanding of the invention, and do not limit the present invention unless otherwise specified. In the specification and the drawings, components having substantially the same functions and configurations are denoted by the same reference symbols, and overlapping descriptions are omitted. The illustration of components that are not directly related to the present invention is omitted.

Fig. 1 is a diagram exemplifying a side airbag device 100 according to an embodiment of the present invention. In Fig. 1, the side airbag device 100 and a right seat 102 of a vehicle to which the side airbag device 100 is applied are exemplified from the outer side in a vehicle width direction. As exemplified in Fig. 1, the side airbag device 100 is configured such that a cushion 104 is expanded and deployed on the side of the seat 102.

The cushion 104 is a bag-shaped site for receiving an occupant in an emergency, such as when an impact has occurred in the vehicle, and is expanded and deployed into a flat shape at the seat 102 on the vehicle center side (so-called far side). In this manner, upon side collision of the vehicle, the cushion 104 restricts the occupant from moving toward the center of the vehicle. The cushion 104 is formed into a bag shape by sawing and bonding a plurality of base cloths in an overlapping manner. The cushion 104 is housed in a housing (not shown) provided on the side of the seat back 106 while being wound or folded. The housed cushion 104 is covered with a seat cover from the top, and cannot be visually recognized from the outside. When the side airbag 100 operates, the cushion 104 cleaves the seat cover and is expanded and deployed to the side of the occupant, thereby restraining the occupant from the side.

An inflator 110 is installed on the side of the seat back 106 together with the cushion 104. The inflator 110 is a gas production device, and supplies gas into the cushion 104 to expand and deploy the cushion 104 in response to an operation signal transmitted from the vehicle upon impact. The inflator 110 employed in the present embodiment is of a cylinder type, and is enclosed and installed in the cushion 104 such that the longitudinal direction of the inflator 110 is oriented in the vertical direction. The inflator 110 is fastened to a housing at the side of the seat back 106 by exposing stud bolts (not shown) integrated with the surface to the outside of the cushion 104 from the inner side.

Types of inflators currently widespread include a type in which a gas generating agent is loaded and is combusted to generate gas, a type in which compression gas is loaded and gas is supplied without generating heat, and a hybrid type in which both combustion gas and compression gas are used. As the inflator 110, any of the types can be used.

The feature of the present embodiment resides in that two baffles, a front baffle 120a and a rear baffle 120b, are disposed inside the cushion 104. The front baffle 120a and the rear baffle 120b are disposed inside the cushion 104 at a distance from each other in the vehicle longitudinal direction and are spread in the vehicle width direction. In this manner, in the expanded and deployed cushion 104, an intermediate region 130 is formed between the front baffle 120a and the rear baffle 120b. As described later, the head of an occupant is restrained by the intermediate region 130.

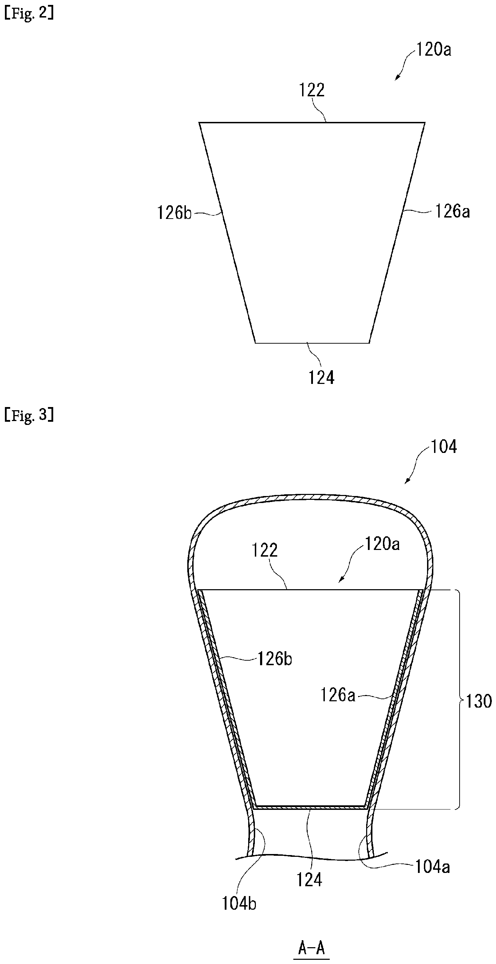

Fig. 2 is a front view of the front baffle 120a in Fig. 1 as seen from the front. Fig. 3 is a cross-sectional view of the side airbag device 100 in Fig. 1 taken along the line A-A. In the present embodiment, the front baffle 120a and the rear baffle 120b have the same shape, and hence the front baffle 120a is exemplified in Fig. 2 and Fig. 3. However, without being limited thereto, the front baffle 120a and the rear baffle 120b may have different shapes.

As exemplified in Fig. 2, the front baffle 120a is made of cloth having an inverted trapezoidal shape in which an upper side 122 is longer than a lower side 124. As exemplified in Fig. 3, lateral sides 126a and 126b (both lateral sides) of the front baffle 120a are bonded to inner surfaces 104a and 104b of a base cloth constituting the cushion 104. The present embodiment exemplifies the configuration in which the front baffle 120a is an isosceles trapezoid having the same length of both lateral sides, but does not exclude trapezoids other than the isosceles trapezoid.

Fig. 1 is referred to again. As exemplified in Fig. 1, in the present embodiment, the front baffle 120a and the rear baffle 120b are bonded to the cushion 104 (base cloth) such that the distance D1 between the upper sides is larger than the distance D2 between the lower sides. In this manner, the front baffle 120a and the rear baffle 120b are disposed to have a V shape in side view.

Fig. 4 is a perspective view of the intermediate region 130 observed from the above when the cushion 104 in Fig. 1 is expanded and deployed. For easier understanding, Fig. 4 illustrates only the intermediate region 130, and the illustration of other regions is omitted. As described above, in the side airbag device 100 in the present embodiment, the front baffle 120a and the rear baffle 120b having an inverted trapezoidal shape are disposed with a distance therebetween in the vehicle longitudinal direction so as to have a V shape. Thus, all the four faces of the intermediate region 130 formed of the front baffle 120a, the rear baffle 120b, and the base cloth of the cushion 104 therebetween (in Fig. 4, inner surfaces 104a and 104b of the base cloth are illustrated) have an inverted trapezoidal shape. In this manner, the intermediate region 130 after the cushion 104 is expanded and deployed, that is, a chamber of the intermediate region 130, has an inverted frustum shape in which four faces are approximated to a quadratic prism or a column having an inverted trapezoidal shape (an inverted frustum shape in which a circular truncated cone or a truncated pyramid obtained by cutting an acute distal end is provided upside down. Hereinafter referred to simply as "inverted frustum shape".) as exemplified in Fig. 4.

Specifically, in the present embodiment, when the cushion 104 is expanded and deployed, a chamber having an inverted frustum shape is formed by the front baffle 120a and the rear baffle 120b. In this manner, gas can be caused to appropriately remain in a region (intermediate region 130) for restraining the head of an occupant as compared with the case where the front baffle 120a and the rear baffle 120b are not provided.

Fig. 5 is a diagram exemplifying a restraint position of the head of an occupant in the intermediate region 130 in Fig. 4. As exemplified in Fig. 5, the side airbag device 100 restrains the head of an occupant in the intermediate region 130 between the front baffle 120a and the rear baffle 120b. In the present embodiment, it is assumed that a head H1 of a large occupant is restrained at an upper part of the intermediate region 130, a head H3 of a small occupant is restrained at a lower part of the intermediate region 130, and a head H2 of an occupant having an intermediate physical size (hereinafter referred to as "medium occupant") is restrained at a center part of an intermediate position in the height direction of the intermediate region 130.

Fig. 6 shows cross-sectional views of the cushion 104 in Fig. 5. Fig. 6(a) is a cross-sectional view taken along the line B-B in Fig. 5, Fig. 6(b) is a cross-sectional view taken along the line C-C in Fig. 1, and Fig. 6(c) is a cross-sectional view taken along the line D-D in Fig. 1. Specifically, Fig. 6(a) is a cross-sectional view of a position (upper part) at which the head H1 of a large occupant is restrained, Fig. 6(b) is a cross-sectional view of a position (center part) at which the head H2 of a medium occupant is restrained, and Fig. 6(c) is a cross-sectional view of a position (lower part) at which the head H3 of a small occupant is restrained.

### (Thickness of intermediate region 130)

The front baffle 120a and the rear baffle 120b have an inverted trapezoidal shape, and hence, as illustrated in Figs. 6(a) to 6(c), the thickness of the intermediate region in the cushion 104 in the vehicle width direction becomes smaller from the top to the bottom in the order of "thickness T1 at upper part>thickness T2 at center part>thickness T3 at lower part". As exemplified in Fig. 6(a), the thickness T1 at the upper part of the intermediate region 130 is the largest in the intermediate region. Thus, the heavy head H1 of a large occupant can be reliably restrained with a sufficient thickness.

The weight of the head H3 of a small occupant is small. Thus, the head H3 of a small occupant can be sufficiently restrained with a thickness smaller than that for restraining the head H1 of a large occupant. In contrast, if the thickness of the cushion 104 is too large, there is a fear in that impact on the head H3 of an occupant when the head H3 is restrained by the cushion 104 may increase. In the present embodiment, as exemplified in Fig. 6(c), the thickness T3 at the lower part of the intermediate region 130 is smaller than the thickness T1 at the upper part exemplified in Fig. 6(a). In this manner, the head H3 of a small occupant can be restrained at the lower part of the intermediate region 130 while alleviating the impact.

As exemplified in Fig. 6(b), at the center part located at the intermediate position in the height direction of the intermediate region 130, the thickness T2 has an intermediate value between the thickness at the upper part and the thickness at the lower part. In this manner, the head H2 of a medium occupant can be appropriately restrained. Consequently, the side airbag device 100 in the present embodiment can appropriately and reliably restrain the head that changes in position and weight depending on the difference in physical size of the occupant in a wider range.

### (Curvature of intermediate region 130)

As described above, the front baffle 120a and the rear baffle 120b are bonded to the cushion 104 (base cloth) such that the distance D1 between the upper sides 122 is larger than the distance D2 of the lower sides 124 (see Fig. 1). In this manner, in the intermediate region 130 in the expanded and deployed state, the curvature becomes larger from the top to the bottom in the order of "curvature r1 at upper part<curvature r2 at center part<curvature r3 at lower part" as illustrated in Fig. 6(a) to Fig. 6(c).

The reason why the curvature of the intermediate region 130 becomes larger to the bottom as described above is because the distance D1 between the upper sides 122 of the front baffle 120a and the rear baffle 120b is larger than the distance D2 between the lower sides 124. Specifically, the base cloth expands over a wide area at an upper part of the intermediate region 130 where the upper sides 122 of the front baffle 120a and the rear baffle 120b are separated away from each other by the wide distance D1. Thus, the curvature of the cushion 104 (base cloth) is small. On the other hand, the cushion 104 (base cloth) expands only over a narrow area at a lower part of the intermediate region 130 where the lower sides of the front baffle 120a and the rear baffle 120b are separated away from each other by the narrow distance D2. Thus, the curvature of the cushion 104 (base cloth) is large. At an intermediate part, the curvature has an intermediate value between the curvature at the upper part and the curvature at the lower part.

The curvature r1 of the upper part of the intermediate region 130 is small, and hence the contact area between the head H1 of a large occupant and the cushion 104 increases. Thus, the heavy head H1 can be reliably restrained with a large area. On the other hand, the curvature r3 of the lower part of the intermediate region 130 is large, and hence the contact area between the head H3 of a small occupant and the cushion 104 decreases. Thus, the head H3 can be restrained while reducing impact during the restraint by the cushion 104. At the intermediate part of the intermediate region 130, the contact area between the head H2 of a medium occupant and the cushion 104 is smaller than the upper part and larger than the lower part. Thus, the head H2 can be restrained with an appropriate area while alleviating impact during the restraint.

Fig. 7 is a diagram for describing the flow of gas in the cushion 104 in Fig. 1. As exemplified in Fig. 7, in the side airbag device 100 in the present embodiment, the inflator 110 is disposed inside the seat back 106 at a position lower than the intermediate region 130. In side view with the cushion 104 expanded, a distance D3 from the upper side 122 of the front baffle 120a to the front edge 104c of the cushion 104 is set to be smaller than a distance D4 from the lower side 124 of the front baffle 120a to the front edge of the cushion 104. A distance D5 from the upper side 122 of the rear baffle 120b to the rear edge 104d of the cushion 104 is set to be smaller than a distance D6 from the lower side 124 of the rear baffle 120b to the rear edge 104d of the cushion 104.

With the above-mentioned configuration, gas channels that become narrower toward the top are formed on the front and rear sides of the intermediate region 130. As exemplified by white arrows in Fig. 7, the gas supplied from the inflator 110 flows into the intermediate region 130 from an opening between the lower sides 124 of the front baffle 120a and the rear baffle 120b and an opening between the upper sides 122 of the front baffle 120a and the rear baffle 120b.

In this case, a wide opening of the intermediate region 130 formed between the upper sides 122 of the front baffle 120a and the rear baffle 120b is disposed ahead of the gas channels tapered upward. In this manner, the gas flows into the upper wide opening of the intermediate region 130 more preferentially than the lower narrow opening. Thus, the gas can be caused to flow preferentially to the upper part of the intermediate region 130 thicker than the lower part thereof, that is, the upper part of the intermediate region 130 for which a large amount of gas is necessary for expansion and deployment. Consequently, the head H1 of a large occupant can be more reliably restrained at the upper part of the intermediate region 130.

It is more preferred that the distance D4 between the front baffle 120a and the front edge 104c of the cushion 104 and the distance D6 between the rear baffle 120b and the rear edge 104d of the cushion 104 be larger than the distance D2 between the lower sides 124 of the front baffle 120a and the rear baffle 120b. In this manner, the amount of gas that flows upward in the intermediate region 130 can be increased to cause the gas to flow to the upper part of the intermediate region 130 more efficiently.

Further, in the present embodiment, the distance D7 between the upper edge 104e of the cushion 104 and the upper sides 122 of the front baffle 120a and the rear baffle 120b is set to be smaller than the distance D1 between the upper sides 122 of the front baffle 120a and the rear baffle 120b. In this manner, gas that has flowed through the channels on the front and rear sides of the intermediate region 130 and been directed upward can be efficiently guided to the upper opening of the intermediate region 130.

While the exemplary embodiments of the present invention have been described with reference to the accompanying drawings, the embodiments described above are exemplary examples of the present invention, and other embodiments can be executed or implemented by various methods. In particular, the present invention is not limited to the detailed shapes, sizes, and component arrangement of parts illustrated in the accompanying drawings unless there is a limitative description herein. The expressions and terms used herein are intended for description, and the present invention is not limited thereto unless there is a limitative description. For example, in the examples, a side airbag provided on the far side of the vehicle seat has been exemplified, but the present invention may be used as a near side airbag to be expanded and deployed between an occupant and a side door.

### [Industrial Applicability]

The present invention can be used for a side airbag device for restraining an occupant at a vehicle seat from the side when an impact has occurred in a vehicle.

## Claims

1. A side airbag device (100) to be expanded and deployed to a front side in a vehicle from a side part of a seat (102) of the vehicle, the side airbag device (100) comprising:
a cushion (104) provided by forming a base cloth into a bag shape;
an inflator (110) for supplying gas to the cushion (104) to expand and deploy the cushion (104); and
a front baffle (120a) and a rear baffle (120b) disposed inside the cushion (104) at a distance therebetween in a vehicle longitudinal direction and spread in a vehicle width direction, **characterized in that**
the front baffle (120a) and the rear baffle (120b) are each made of cloth having an inverted trapezoidal shape in which an upper side (122) is longer than a lower side (124), and are bonded to inner surfaces (104a,104b) of the base cloth at both lateral sides (126a,126b),
a distance (D1) between the upper sides (122) of the front baffle (120a) and the rear baffle (120b) is larger than a distance (D2) between the lower sides (124) thereof, and
the cushion (104) is configured to restrain a head (H1,H2,H3) of an occupant by an intermediate region (130) between the front baffle (120a) and the rear baffle (120b) when expanded and deployed; wherein
the curvature of said intermediate region becomes larger from the top to the bottom in the expanded and deployed state of the cushion.

2. The side airbag device (100) according to claim 1, wherein a chamber of the intermediate region (130) surrounded by the front baffle (120a), the rear baffle (120b), and the base cloth of the cushion (104) between the baffles (120a,120b) has an inverted frustum shape when the cushion (104) is expanded and deployed.

3. The side airbag device (100) according to claim 1 or 2, wherein
the inflator (110) is disposed inside a seat back (106) at a position lower than the intermediate region (130), and
in side view with the cushion (104) expanded,
a distance (D3) from the upper side (122) of the front baffle (120a) to a front edge (104c) of the cushion (104) is smaller than a distance (D4) from the lower side (124) of the front baffle (120a) to the front edge (104c) of the cushion (104), and
a distance (D5) from the upper side (122) of the rear baffle (120b) to a rear edge (104d) of the cushion (104) is smaller than a distance (D6) from the lower side (124) of the rear baffle (120b) to the rear edge (104d) of the cushion (104) .

4. The side airbag device (100) according to any one of claims 1 to 3, wherein a distance (D7) between an upper edge (104e) of the cushion (104) and the upper side (122) of the front baffle (120a) and a distance (D7) between the upper edge (104e) of the cushion (104) and the upper side (122) of the rear baffle (120b) are smaller than the distance (D1) between the upper sides (122) of the front baffle (120a) and the rear baffle (120b).

## Patentansprüche

1. Seitenairbagvorrichtung (100), die von einem Seitenteil eines Sitzes (102) des Fahrzeugs aus expandiert und an einer Vorderseite in einem Fahrzeug entfaltet werden soll, wobei die Seitenairbagvorrichtung (100) Folgendes umfasst:
ein Kissen (104), das durch Ausbilden eines Grundgewebes in eine Beutelform bereitgestellt wird;
einen Gasgenerator (110) zum Zuführen von Gas zu dem Kissen (104), um das Kissen (104) zu expandieren und zu entfalten; und
eine vordere Prallfläche (120a) und eine hintere Prallfläche (120b), die innerhalb des Kissens (104) in einem Abstand dazwischen in einer Fahrzeuglängsrichtung angeordnet und in einer Fahrzeugbreitenrichtung ausgebreitet sind, **dadurch gekennzeichnet, dass**
die vordere Prallfläche (120a) und die hintere Prallfläche (120b) jeweils aus Gewebe bestehen, das eine umgekehrte Trapezform aufweist, bei der eine Oberseite (122) länger als eine Unterseite (124) ist, und an beiden Seiten (126a, 126b) mit Innenoberflächen (104a, 104b) des Grundgewebes verbunden sind,
ein Abstand (D1) zwischen den Oberseiten (122) der vorderen Prallfläche (120a) und der hinteren Prallfläche (120b) größer als ein Abstand (D2) zwischen den Unterseiten (124) davon ist, und
das Kissen (104) konfiguriert ist, um einen Kopf (H1, H2, H3) eines Insassen durch einen Zwischenbereich (130) zwischen der vorderen Prallfläche (120a) und der hinteren Prallfläche (120b) zurückzuhalten, wenn es expandiert und entfaltet wird; wobei
die Krümmung des Zwischenbereichs in dem expandierten und entfalteten Zustand des Kissens von oben nach unten größer wird.

2. Seitenairbagvorrichtung (100) nach Anspruch 1, wobei eine Kammer des Zwischenbereichs (130), die durch die vordere Prallfläche (120a), die hintere Prallfläche (120b) und das Grundgewebe des Kissens (104) zwischen den Prallflächen (120a, 120b) ummantelt ist, eine umgekehrte Kegelstumpfform aufweist, wenn das Kissen (104) expandiert und entfaltet wird.

3. Seitenairbagvorrichtung (100) nach Anspruch 1 oder 2, wobei
der Gasgenerator (110) innerhalb einer Sitzlehne (106) an einer Position niedriger als der Zwischenbereich (130) und in Seitenansicht mit dem expandierten Kissen (104) angeordnet ist,
ein Abstand (D3) von der Oberseite (122) der vorderen Prallfläche (120a) zu einer vorderen Kante (104c) des Kissens (104) kleiner als ein Abstand (D4) von der Unterseite (124) der vorderen Prallfläche (120a) zu der vorderen Kante (104c) des Kissens (104) ist, und
ein Abstand (D5) von der Oberseite (122) der hinteren Prallfläche (120b) zu einer hinteren Kante (104d) des Kissens (104) kleiner als ein Abstand (D6) von der Unterseite (124) der hinteren Prallfläche (120b) zu der hinteren Kante (104d) des Kissens (104) ist.

4. Seitenairbagvorrichtung (100) nach einem der Ansprüche 1 bis 3, wobei ein Abstand (D7) zwischen einer Oberkante (104e) des Kissens (104) und der Oberseite (122) der vorderen Prallfläche (120a) und ein Abstand (D7) zwischen der Oberkante (104e) des Kissens (104) und der Oberseite (122) der hinteren Prallfläche (120b) kleiner als der Abstand (D1) zwischen den Oberseiten (122) der vorderen Prallfläche (120a) und der hinteren Prallfläche (120b) ist.

## Revendications

1. Dispositif de coussin de sécurité gonflable latéral (100) destiné à être expansé et déployé au niveau d'un côté avant dans un véhicule à partir d'une partie latérale d'un siège (102) du véhicule, le dispositif de coussin de sécurité gonflable latéral (100) comprenant :
un coussin (104) fourni en façonnant un tissu de base en forme de sac ;
un gonfleur (110) destiné à fournir du gaz au coussin (104) pour expanser et déployer le coussin (104) ; et
un déflecteur avant (120a) et un déflecteur arrière (120b) disposés à l'intérieur du coussin (104) à distance l'un de l'autre dans une direction longitudinale du véhicule et répartis dans une direction de largeur du véhicule, **caractérisé en ce que**
le déflecteur avant (120a) et le déflecteur arrière (120b) sont chacun constitués d'un tissu de forme trapézoïdale inversée dans laquelle un côté supérieur (122) est plus long qu'un côté inférieur (124), et sont liés à des surfaces intérieures (104a, 104b) du tissu de base au niveau des deux côtés latéraux (126a, 126b),
une distance (D1) entre les côtés supérieurs (122) du déflecteur avant (120a) et du déflecteur arrière (120b) est plus grande qu'une distance (D2) entre les côtés inférieurs (124) de ceux-ci, et
le coussin (104) est conçu pour retenir une tête (H1, H2, H3) d'un occupant par une région intermédiaire (130) entre le déflecteur avant (120a) et le déflecteur arrière (120b) lorsqu'il est expansé et déployé ;
la courbure de ladite région intermédiaire s'accroissant de haut en bas dans l'état expansé et déployé du coussin.

2. Dispositif de coussin de sécurité gonflable latéral (100) selon la revendication 1, une chambre de la région intermédiaire (130) entourée du déflecteur avant (120a), du déflecteur arrière (120b) et du tissu de base du coussin (104) entre les déflecteurs (120a, 120b) étant de forme tronconique inversée lorsque le coussin (104) est expansé et déployé.

3. Dispositif de coussin de sécurité gonflable latéral (100) selon la revendication 1 ou 2,
le gonfleur (110) étant disposé à l'intérieur d'un dossier de siège (106) au niveau d'une position plus basse que la région intermédiaire (130), et,
en vue latérale, le coussin (104) étant expansé,
une distance (D3) du côté supérieur (122) du déflecteur avant (120a) à un bord avant (104c) du coussin (104) étant moindre qu'une distance (D4) du côté inférieur (124) du déflecteur avant (120a) au bord avant (104c) du coussin (104), et
une distance (D5) du côté supérieur (122) du déflecteur arrière (120b) à un bord arrière (104d) du coussin (104) étant moindre qu'une distance (D6) du côté inférieur (124) du déflecteur arrière (120b) au bord arrière (104d) du coussin (104).

4. Dispositif de coussin de sécurité gonflable latéral (100) selon l'une quelconque des revendications 1 à 3, une distance (D7) entre un bord supérieur (104e) du coussin (104) et le côté supérieur (122) du déflecteur avant (120a) et une distance (D7) entre le bord supérieur (104e) du coussin (104) et le côté supérieur (122) du déflecteur arrière (120b) étant moindres que la distance (D1) entre les côtés supérieurs (122) du déflecteur avant (120a) et du déflecteur arrière (120b).
